# EUROPÄISCHE PATENTSCHRIFT

(11) **EP 0 616 285 B1**
(45) Veröffentlichungstag und Bekanntmachung des Hinweises auf die Patenterteilung: **01.10.1997**
(21) Anmeldenummer: 94103066.0
(22) Anmeldetag: 01.03.1994
(51) Int. Cl.: G06F 11/14, G06F 11/20

(54) **Verfahren zur Sicherung von kundenspezifischen Daten eines Kommunikationssystems**
Backing up method for customized data in a communication system
Procédé de mise en sécurité de données personnalisées dans un système de communication

(30) Priorität: 19.03.1993 DE 4308900
(43) Veröffentlichungstag der Anmeldung: 21.09.1994
(73) Patentinhaber: SIEMENS AKTIENGESELLSCHAFT, 80333 München (DE)
(72) Erfinder: Wöss, Friedrich, Dipl.-Ing., D-83624 Otterfing (DE); Hierholzer, Peter, Dipl.-Ing., D-82407 Wielenbach (DE); Höfner, Jürgen, D-82291 Mammendorf (DE)

(56) Entgegenhaltungen:
- EP-A- 0 021 288
- DE-A- 3 522 220
- DE-A- 4 135 000

## Beschreibung

Die Erfindung betrifft ein Verfahren zur Sicherung von kundenspezifischen Daten.

Zeitgemäße Telekommunikationsanlagen sind durch eine Vielzahl von Leistungsmerkmalen charakterisiert, die vom Betreiber je nach Bedürfnis selbst ausgestaltet werden können. Die Leistungsmerkmale prägenden kundenspezifischen Daten werden, je nach Benutzergewohnheit oder Benutzerwunsch, verändert. Für einen programmgesteuerten Betrieb einer Telekommunikationsanlage ist es deshalb besonders wichtig, die kundenspezifischen Daten permanent den ausführenden Programmodulen des jeweiligen Leistungsmerkmals bereitzustellen. Bisher ist es üblich, in vom Betreiber beispielsweise selbst vorgebbaren Zeitintervallen, Sicherungsdateien von kundenspezifischen Daten auf einer Hard-Disk zu erstellen. Bei einem Hard-Disk Ausfall und bei weiterlaufendem System kann ohne Beeinträchtigung des Kommunikationsbetriebes die Hard-Disk getauscht werden und anschließend wieder ein Abspeichern des aktuellen Datenbestandes z.B. der kundenspezifischen Daten auf der Hard-Disk durchgeführt werden. Tritt jedoch zusammen mit einem Hard-Disk Defekt ein Systemausfall in der Kommunikationsanlage auf, dann gehen die spezifisch programmierten bzw. kundenspezifischen Daten verloren und der Betreiber oder ein Telekommunikationsteilnehmer muß alle von ihm, ein bestimmtes Leistungsmerkmal prägende Daten neu einrichten bzw. kundenspezifische Daten erneut eingeben oder voreinstellen.

Der Erfindung liegt die Aufgabe zugrunde, ein Verfahren anzugeben, mit Hilfe dessen kundenspezifische Daten nach einem wie oben beschriebenen Systemausfall verfügbar bleiben.

Die Aufgabe wird erfindungsgemäß durch die im Patentanspruchs 1 genannten Merkmale gelost.

Die Erfindung bringt durch das zusätzliche Abspeichern von kundenspezifischen Daten in eine nichtflüchtige Speichereinheit den Vorteil mit sich, daß bei einem Systemstillstand der Kommunikationsanlage bei zusätzlichem Hard-Disk Defekt, alle aktuellen benutzerspezifischen Daten dem Betreiber der Kommunikationsanlage nach einem "Hochlauf" der Kommunikationsanlage wieder zur Verfügung stehen.

Eine weitere Ausgestaltung der Erfindung ist, daß die kundenspezifischen Daten in eine Kommandostapel Datei umgesetzt werden, dies bringt den Vorteil mit sich, daß bei einem Systemprogrammwechsel die kundenspezifischen Daten sofort den neuen Systemprogramm-Moduln zur Verfügung stehen und nicht erst generiert werden müssen.

Eine vorteilhafte Weiterentwicklung der Erfindung ist in der Weise ausgebildet, daß der Speicherplatz der kundenspezifischen Daten (Kommandostapel Datei) durch datenkomprimierende Verarbeitungsprozeduren reduziert wird. Dies bringt den Vorteil mit sich, daß kleinere Speicherelemente verwendet und dadurch mehr Platz auf der Leiterplatte für weitere Schaltkreise zur Verfügung stehen.

Anhand der Zeichnungen soll im folgenden ein Ausführungsbeispiel der Erfindung erläutert werden.
Es zeigen:
- Fig. 1: eine schematische Darstellung des Verfahrens zur Datensicherung und
- Fig. 2: eine schematische Darstellung zur Generierung speicherter Daten.

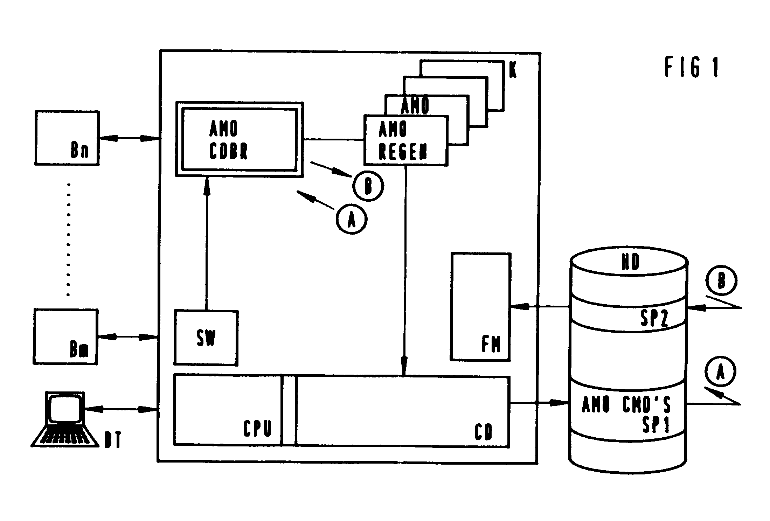

Fig. 1 zeigt eine schematische Darstellung eines in einem Kommunikationssystem K integrierten Verfahrens zur Sicherung von kundenspezifischen Daten. Die kundenspezifischen Daten werden entweder direkt durch anlageninterne Anstoßprozeduren (Zeitüberwachungseinheit) oder über ein Betriebsterminal BT durch einen Betreiber verändert. Der Sicherungsprozeß als solcher läuft automatisch, daß heißt für den Kommunikationsteilnehmer nicht bemerkbar im Hintergrund der mikroprozessorgesteuerten Kommunikationsanlage K ab. In welchen Zeitintervallen die kundenspezifischen Daten zu sichern sind sowie der Zeitpunkt der Datensicherung wird vom Betreiber selbst festgelegt. Diese Zeitintervalle können einen Zeitraum von Stunden oder Tagen umfassen. Die Datensicherung läuft dabei programmgesteuert ab. Nachdem von der Zeitüberwachungseinheit SW ein erstes Programmodul AMO CDBR (Administration and Maintenance Order - Customer Data Backup and Restoration) angestoßen wurde, werden kundenspezifische Daten aus der dem Mikroprozessor der Kommunikationsanlage zugeordneten Speichereinheit RAM ausgelesen und in Verbindung mit einem zweiten Programmodul AMO REGEN (Administration Maintenance Order - Regeneration) eine eine Einrichte- und Anderungskommandos enthaltende Kommandostapel-Datei erstellt. Diese Datei wird in einem Speicherbereich SP1 der Hard-Disk HD abgespeichert. Nachdem die Kommandostapel-Datei bildenden Programmprozeduren abgeschlossen wurden, wird durch das erste Programmodul nach Maßgabe eines Datenkomprimier-Algorithmuses, z.B. einen Delta-Algorithmus, die Daten der Kommandostapel Datei komprimiert und erneut in einen auf der Hard-Disk HD vorbestimmten Speicherplatz SP2 abgespeichert. Durch eine Kopierprozedur, angestoßen durch das erste Programmodul AMO CDBR, werden die komprimierten Daten der Kommandostapel-Datei in eine nicht flüchtige Speichereinheit FM, insbesondere in ein Flash Memory, eingeschrieben.

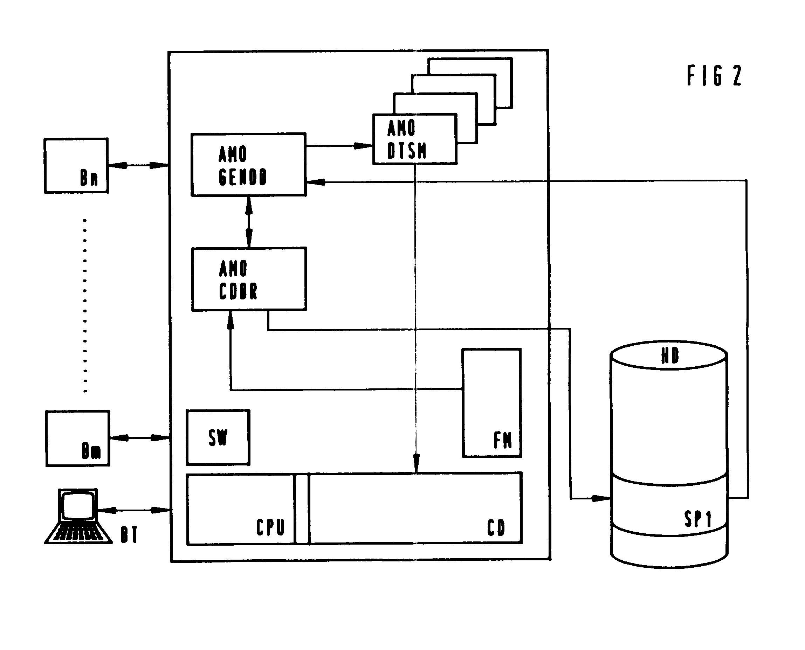

Fig. 2 zeigt eine schematische Darstellung zur Generierung abgespeicherter kundenspezifischer Daten die im Flash Memory FM abgespeichert sind.

Nachfolgend sei angenommen, daß die Kommunikationsanlage bedingt durch einen Spannungsausfall sowie die dem Kommunikationssystem zugeordnete externe Speichereinheit z.B. eine Hard-Disk ausgefallen ist. Nach der Installation einer neuen Hard-Disk wird die Kommunikationsanlage stufenweise wieder hochgefahren. Eine Grundinitialisierung der Kommunikationsanlage wird dabei durch die auf der neuen Hard-Disk abgespeicherten Systemprogramme sowie Programmodule erreicht. Nachdem diese abgeschlossen ist, werden durch Programmprozeduren des ersten Programmoduls AMO CDBR aus dem Flash Memory die zuletzt gespeicherten kundenspezifischen Daten der komprimierten Kommandostapel-Datei ausgelesen und die Kommandostapel-Datei auf der Hard-Disk dekomprimiert abgespeichert. Nach der Beendigung der Dekomprimierungsprozedur wird ein drittes Programmodul AMO GENDB (Generation der Datenbasis) durch das Modul AMO CDBR angestoßen, das die Daten der Kommandostapel Datei liest und mit Hilfe von Unterprogrammprozeduren wie z.B.:
AMO DTSM. (Device Type Configuration for Service Modul),
AMO DCSM. (Hard-Disk Configuration for Service Modul),
AMO DASM. (Hard-Disk Area-Allocation for Service Modul), entsprechende kundenspezifische Dateien in einer dem Mikroprozessor zugeordneten Speichereinheit CD, insbesondere einer Kundenspezifischen Datenbasis, hinterlegt.

Eine Abspeicherung bzw. die Regenerierung von kundenspezifischen Daten in das Flash Memory bzw. aus dem Flash Memory kann neben der wie oben beschriebenen programmgesteuerten Durchführung ebenso manuell von einem Bedienerterminal BT eingeleitet sowie durchgeführt werden.

## Patentansprüche

1. Verfahren zur Abspeicherung von in einer Speichereinheit (CD) einer mikroprozessorgesteuerten Kommunikationsanlage (K) gespeicherten Daten, wobei angestoßen durch eine Zeitüberwachungseinheit (SW) oder durch Eingabeprozeduren an einem Betreiberterminal (BT) die Daten nach Maßgabe von Abspeicherungsprozeduren ausführenden Programmoduln aus der dem Mikroprozessor zugeordneten Speichereinheit (CD) gelesen und in einer der Kommunikationsanlage (K) zugeordneten externen Speichereinheit (HD) abgespeichert werden,
**dadurch gekennzeichnet,**
daß ein die Abspeicherungsprozeduren einleitendes und überwachendes erstes Programmodul (AMD CDBR) kundenspezifische Daten regelmäßig aus der dem Mikroprozessor der Kommunikationsanlage zugeordneten Speichereinheit (CD) ausliest und diese Daten sowohl in einem Speicherbereich (SP1) der externen Speichereinheit (HD) als auch in einer nichtflüchtigen Speichereinheit (FM) ablegt.

2. Verfahren nach Anspruch 1,
**dadurch gekennzeichnet,**
daß in Verbindung mit einem zweiten Programmodul (AMO REGEN) die kundenspezifischen Daten in eine Kommandostapel Datei umgesetzt und auf der externen Speichereinheit (HD) abgelegt werden.

3. Verfahren nach Anspruch 1,
**dadurch gekennzeichnet,**
daß die kundenspezifischen Daten aus dem externen Speicherbereich (HD) ausgelesen und nach datenkomprimierenden Programmprozeduren, eingeleitet durch das erste Programmodul (AMO CDBR), wieder in einem Speicherbereich (SP2) der externen Speichereinheit (HD) abgelegt werden.

4. Verfahren nach Anspruch 1,
**dadurch gekennzeichnet,**
daß die Daten der datenkomprimierten Kommandostapel Datei in der nicht flüchtigen Speichereinheit (FM), einem Flash Memory, abgespeichert werden.

5. Verfahren nach Anspruch 1,
**dadurch gekennzeichnet,**
daß die Datenkomprimierung nach Maßgabe eines Delta-Algorithmus durchgeführt wird.

6. Verfahren nach Anspruch 1,
**dadurch gekennzeichnet,**
daß die komprimierten Daten der Kommandostapel Datei durch Programmprozeduren des ersten Programmoduls (AMO CDBR) aus dem nicht flüchtigen Speicherelement (FM) gelesen und dekomprimiert werden, daß danach ein drittes Programmodul (AMO GENDB) durch das erste Programmodul (AMO CDBR) angestoßen und aufgrund der Programmprozeduren des dritten Programmoduls (AMO GENDB) die dekomprimierte Kommandostapel Datei gelesen und entsprechende kundenspezifische Daten erstellt und in den dem Mikroprozessor der Kommunikationsanlage (K) zugeordneten Speicherbereich (CD) wieder abgespeichert werden.

## Claims

1. Method for saving data stored in a storage unit (CD) of a microprocessor-controlled communications system (K), the data being read from the storage unit (CD) assigned to the microprocessor and stored in an external storage unit (HD) assigned to the communications system (K), in accordance with program modules which execute save procedures, and in response to a time monitoring unit (SW) or input procedures at an operator terminal (BT), characterized in that a first program module (AMD CDBR). which initiates and monitors the save procedures, regularly reads customer data from the storage unit (CD) assigned to the microprocessor of the communications system and puts these data both in a storage area (SP1) of the external storage unit (HD) and in a non-volatile storage unit (FM).

2. Method according to Claim 1, characterized in that, in conjunction with a second program module (AMO REGEN), the customer data are converted into a command-stack file and put on the external storage unit (HD).

3. Method according to Claim 1, characterized in that at the instigation of the first program module (AMO CDBR), the customer data are read from the external storage area (HD) and, after data-compressing program procedures put back in a storage area (SP2) of the external storage unit (HD) .

4. Method according to Claim 1, characterized in that the data of the data-compressed command-stack file are stored in the non-volatile storage unit (FM), a flash memory.

5. Method according to Claim 1, characterized in that the data compression is carried out in accordance with a delta algorithm.

6. Method according to Claim 1, characterized in that by means of program procedures of the first program module (AMO CDBR), the compressed data of the command-stack file are read from the non-volatile storage element (FM) and decompressed and in that a third program module (AMO GENDB) is prompted by the first program module (AMO CDBR) and, because of the program procedures of the third program module (AMO GENDB), the decompressed command-stack file is read and corresponding customer data are created and saved again in the storage area (CD) assigned to the microprocessor of the communications system (K).

## Revendications

1. Procédé pour la sauvegarde de données stockées dans une unité de mémoire (CD) d'une installation de communication (K) commandée par microprocesseur, les données étant, à la suite d'un déclenchement initialisé par une unité de contrôle à base de temps (SW) ou par une procédure de saisie sur un terminal d'opérateur (BT), lues dans une unité de mémoire (CD) affectée au microprocesseur et ceci sous la commande de modules de programme exécutant les procédures de lecture, puis mémorisées dans une unité de mémoire externe (HD) affectée à l'installation de communication (K),
**caractérisé par**
le fait qu'un premier module de programme (AMD CDBR) qui initialise et contrôle les procédures de lecture lit à intervalles réguliers les données personnalisées dans l'unité de mémoire (CD) affectée au microprocesseur de l'installation de communication et stocke ces données aussi bien dans une zone de mémoire (SP1) de l'unité de mémoire externe (HD) que dans une unité de mémoire non-volatile (FM).

2. Procédé conforme à la revendication 1,
**caractérisé par**
le fait que, en liaison avec un deuxième module de programme (AMO REGEN), les données personnalisées sont converties en fichier de commandes par lots et stockées sur l'unité de mémoire externe (HD).

3. Procédé conforme à la revendication 1,
**caractérisé par**
le fait que les données personnalisées sont lues sur la mémoire externe (HD) et, après des procédures de programme à compression des données qui sont initialisées par le premier module (AMO CDBR), stockées de nouveau dans une zone de mémoire (SP2) de l'unité de mémoire externe (HD).

4. Procédé conforme à la revendication 1,
**caractérisé par**
le fait que les données du fichier de commandes par lots renfermant les données compressées sont stockées dans l'unité de mémoire non-volatile (FM), une flash memory.

5. Procédé conforme à la revendication 1,
**caractérisé par**
le fait que la compression des données est effectuée suivant un algorithme delta.

6. Procédé conforme à la revendication 1,
**caractérisé par**
le fait que les données compressées du fichier de commandes par lots sont, suivant des procédures de programme du premier module (AMO CDBR), lues sur l'élément de mémoire non-volatile (FM) et décompressées,
le fait que, ensuite, un troisième module (AMO GENDB) est déclenché par le premier module (AMO CDBR) et que, en fonction des procédures du troisième module (AMO GENDB), le fichier décompressé de commandes par lots est lu, les données personnalisées correspondantes sont générées et stockées de nouveau dans la zone de mémoire (CD) attribuée au microprocesseur de l'installation de communication (K).
